# EUROPÄISCHE PATENTSCHRIFT

(11) **EP 3 617 402 B1**
(45) Veröffentlichungstag und Bekanntmachung des Hinweises auf die Patenterteilung: **10.03.2021**
(21) Anmeldenummer: 19182772.4
(22) Anmeldetag: 27.06.2019
(51) Int. Cl.: D21C 7/00, D21C 7/06, B65G 33/00, B65G 33/26, B30B 11/24

(54) **STOPFSCHNECKE**
STUFFING SCREW
VIS DE BOURRAGE

(30) Priorität: 31.08.2018 AT 507452018
(43) Veröffentlichungstag der Anmeldung: 04.03.2020
(73) Patentinhaber: Andritz AG, 8045 Graz (AT)
(72) Erfinder: ULM, Dietmar, 2384 Breitenfurt (AT)

(56) Entgegenhaltungen:
- DE-A1- 3 527 548
- GB-A- 662 104

## Beschreibung

Die Erfindung betrifft eine Stopfschnecke zur Förderung eines Aufgabeguts von einem Einlassbereich zu einem Auslassbereich, wobei die Bereiche unterschiedliche Druckniveaus aufweisen, bei gleichzeitiger Entwässerung des Aufgabeguts durch Kompression, mit einem Gehäuse und einer rotierenden Schnecke mit einer Schneckenlänge L in Axialrichtung, wobei die rotierende Schnecke lösbar mehrteilig ausgeführt ist und mindestens eine lösbare Verbindung der mehrteiligen rotierenden Schnecke innerhalb der Schneckenlänge L vorgesehen ist, wobei innerhalb der Schneckenlänge L mindestens zwei Teile der mehrteiligen rotierenden Schnecke aus unterschiedlichen metallischen Werkstoffen bestehen. Die Erfindung betrifft auch eine Verwendung der erfindungsgemäßen Stopfschnecke zur Entwässerung eines Aufgabeguts.

Im Allgemeinen werden Stopfschnecken - im englischen Sprachraum als plug screw feeder bezeichnet - zur Förderung eines Aufgabeguts von einem Einlassbereich zu einem Auslassbereich, wobei die Bereiche unterschiedliche Druckniveaus aufweisen, bei gleichzeitiger Entwässerung, d.h. zur Abtrennung von Flüssigkeit aus einer Fest-Flüssig-Mischung, eingesetzt. Typischerweise sind Stopfschnecken aufgebaut aus einem Einlassbereich zur Aufnahme des zu entwässernden Aufgabeguts, einem Entwässerungsbereich mit einem Gehäuse und einer rotierenden Schnecke und einem Auslassbereich zur Abgabe des Aufgabeguts. Die Schnecke besteht aus einer in Axialrichtung ausgeführten Welle, an der eine spiralförmige Wendel angebracht ist, wobei typischerweise die spiralförmige Wendel nicht bis zum Schneckenende nahe dem Auslassbereich reicht, wodurch die Schnecke nahe dem Auslassbereich zylindrisch, kegelig, als Kegelstumpf oder ähnlich ausläuft. Die Auslegung einer Schnecke berücksichtigt die zu erzielende Fördermenge, und auch die zu erzielende Kompression bzw. Verdichtung des Aufgabeguts. Dabei bestimmt im Wesentlichen die Geometrie der Schnecke in der Nähe des Einlassbereiches die zu erzielende Fördermenge, ebenso wie die Geometrie der Schnecke in der Nähe des Auslassbereiches die erzielbare Kompression bzw. Verdichtung festlegt. In Anlehnung an die unterschiedliche geometrische Ausgestaltung der Schnecke im Bereich des Ein- und Auslasses spricht man bei herkömmlichen Schnecken von einem die Fördermenge bestimmenden Förderbereich bzw. einem die Kompression bestimmenden Kompressionsbereich der Schnecke. Das Aufgabegut wird somit zwischen dem Gehäuse und der spiralförmigen Wendel der rotierenden Schnecke komprimiert, entwässert und vom Einlassbereich zum Auslassbereich befördert. Typischerweise ist die statische Druckdifferenz zwischen Einlassbereich und Auslassbereich der Stopfschnecke bei Anwendungen zur Herstellung von Papier und Zellstoff größer 2 bar, bei Anwendungen zur Herstellung von MDF Produkten größer 5 bar und bevorzugt größer 8 bar und bei Anwendungen zur Herstellung von Bioethanol größer16 bar, wobei das im Auslassbereich unter Druck stehende Aufgabegut einer nachfolgenden, ebenfalls unter statischem Überdruck stehenden Vorrichtung, wie z.B. einem Druckbehälter, einem Dampfdruckbehälter oder einem Zellstoffkocher, zugeführt wird. Bevorzugt wird das Aufgabegut axial aus dem Auslassbereich der Stopfschnecke ausgebracht.

Bei Stopfschnecken zur Entwässerung kann die Schnecke, d.h. die Welle und die daran angebrachte Wendel, ein durchgehender Teil oder eine nicht trennbare Konstruktion sein, z.B. Schweißkonstruktion, wobei für Welle und Wendel ein einheitlicher Werkstoff verwendet wird. Entsprechend den Anforderungen wird die Werkstoffwahl für die Schnecke einheitlich ausgeführt. Es ist auch bekannt, dass derart ausgeführte Schnecken in weiterer Folge eine Veredelung der Oberfläche erfahren können, z.B. durch Aufschweißen einer Schutzschicht, durch eine Aufpanzerung, oder ähnlichem, unter Verwendung weiterer Werkstoffe. Unbeschadet davon besteht aber der Grundkörper der Schnecke, d.h. die Welle und die daran angebrachte Wendel, aus einem einheitlichen Werkstoff. In der EP 1 992 894 B1 ist eine entsprechende Vorrichtung zum Entwässern von Aufgabegut durch Verdichtung beschrieben. Das typische Anwendungsfeld ist die Aufarbeitung von lignozellulosehaltigem Material, wie zum Beispiel Holz, Einjahrespflanzen etc. Dabei werden die gewonnenen Fasern als Holzfasern bei der Herstellung von Holzfaserprodukten, wie z.B. MDF (Medium Density Fibreboard) Produkten, oder als Fasern bei der Papierherstellung eingesetzt. Entsprechend ist der aus der hohen Kompression des Aufgabeguts resultierende Verschleiß der Schneckenwendel als auch des Mantelrohrs problematisch. Dieser kann zu einer Änderung der Geometrie der Wendel bzw. der Welle und in Folge zu einer veränderten Entwässerungsleistung führen. Bei besonders fortgeschrittenem Verschleiß ist auch ein Abriss der Wendel und/oder der Welle möglich. Daher ist in regelmäßigen Zeitintervallen die Schneckenwendel als auch das Mantelrohr zu erneuern oder aufzupanzern. Damit verbunden sind längere Stillstandszeiten und eine verringerte Komponentenverfügbarkeit.

Die DE 3527548 A1 offenbart einen Verschleißschutz für die Verschleißkante einer Förderschnecke, wobei der Verschleißschutz als zweiteiliges Verschleißsegment mit einer Verschleißplatte und einem Positionierteil ausgeführt ist. Das Verschleißsegment wird mit dem Schneckengrundkörper verlötet, wobei der Trägerkörper aus ferritischem oder austenitischem Stahl besteht.

Im Stand der Technik sind auch mehrteilige Schnecken beschrieben. Dabei beschreibt die EP 0330003 A1 eine Schneckenpresse, wobei ein einfacher Austausch des in der Verschleißzone liegenden Teils der Schnecke ermöglicht werden soll. Dabei hat sich die Anwendung von besonders verschleißfestem Material, durch den eine sehr hohe Standfestigkeit des freien Schneckenendes erzielbar ist, als vorteilhaft erwiesen. Die EP 0450164 A1 beschreibt eine Schneckenpresse, wobei eine Beschädigung oder Abtragung an dem vorderen zylindrischen Teil der Pressschnecke keine aufwendigen Austauscharbeiten erfordern. Es wird auch erkannt, daß Teile der Pressschnecke aus unterschiedlich verschleißfestem Material hergestellt werden können, wobei das teuerste, verschleißfeste Material für den Pressteil verwendet wird. Die WO 02/20257 beschreibt eine zweigeteilte Pressschnecke, die eine einfache, wenig zeitintensive Instandsetzung ermöglichen soll. Dabei kann die Oberfläche des Pressteils, möglicherweise im Gegensatz zu der des Förderteils, aus einer extrem harten Beschichtung bestehen, oder aber das komplette Pressteil aus einem extrem harten Material hergestellt werden.

Ziel der Erfindung ist eine verlängerte Laufzeit der Stopfschnecke, wie auch verkürzte Stillstandszeiten im Sanierungsfall, bei insgesamt geringerem Werkstoffeinsatz.

Dies erfolgt erfindungsgemäß dadurch, dass mindestens ein Teil der mehrteiligen rotierenden Schnecke aus einem Gusseisen mit einem Chromgehalt von weniger als 1 Masse % besteht wobei das Gusseisen eine minimale Härte von 260 HB30, eine minimale Zugfestigkeit Rₘ von 800 N/mm² und eine Bruchdehnung im Bereich von 1 bis 10 % aufweist, und der mindestens eine Teil im geringbelasteten Bereich der Stopfschnecke angeordnet ist. Typischerweise ist erfindungsgemäß mindestens eine lösbare Verbindung der mehrteiligen Schnecke so ausgeführt, dass die lösbare Verbindung Teile der Schnecke, an denen jeweils eine spiralförmige Wendel angebracht ist, verbindet. Dadurch können Teile der Schnecke, die hochbelastetet sind und stark verschleißen, aus hochbelastbaren Werkstoffen gefertigt werden, wohingegen die Werkstoffwahl der geringbelasteten Teile der Schnecken nach ökonomischen Gesichtspunkten erfolgen kann. Entsprechend der Teilung der Schnecke müssen im Schadensfall, z.B. Abrieb der Wendel, auch nur jene Teile der Schnecke ersetzt werden, die defekt sind, wodurch sich Reparatur und Stillstandszeiten deutlich reduzieren. Bei einer erfindungsgemäß lösbar mehrteilig aus unterschiedlichen metallischen Werkstoffen ausgeführten Schnecke ist keine Veredelung der Oberfläche der Schnecke, z.B. durch Aufschweißen einer Schutzschicht, durch eine Aufpanzerung, oder ähnlichem, unter Verwendung weiterer Werkstoffe notwendig. Erfindungsgemäß besteht mindestens ein Teil der mehrteiligen rotierenden Schnecke aus einem Gusseisen mit einem Chromgehalt von weniger als 1 Masse %wobei das Gusseisen eine minimale Härte von 260 HB30, eine minimale Zugfestigkeit Rₘ von 800 N/mm² und eine Bruchdehnung im Bereich von 1 bis 10 % aufweist. Dieser mindestens eine Teil der rotierenden Schnecke wird im geringbelasteten Bereich der Stopfschnecke eingesetzt. Das erfindungsgemäß spezifizierte Gusseisen zeichnet sich für diese Anwendung mit vorteilhaften mechanischen Werkstoffeigenschaften - d.h. hohe Werte hinsichtlich Zugfestigkeit und Bruchdehnung - aus. Dem werkstoffkundigen Fachmann ist es dabei ein leichtes in Frage kommende Gusseisensorten auf Basis der obigen Bereichsangaben von relevanten Werkstoffeigenschaften zu identifizieren, wobei zumindest verschiedene Gusseisensorten aus den Gruppen Grauguss mit Kugelgrafit und Bainitischer Grauguss mit Kugelgrafit (nach DIN EN 1564) die obigen Werkstoffeigenschaften erfüllen. Der Einsatz eines erfindungsgemäß spezifizierten Gusseisens im geringbelasteten Bereich der Stopfschnecke hat den Effekt, dass insbesondere der geringbelastete Bereich der Stopfschnecke eine verbesserte Standzeit aufweist, wodurch mittelfristig eine insgesamt verkürzte Stillstandszeit und ein insgesamt geringerer Werkstoffeinsatz gegeben sind. Dies folgt daraus, dass noch seltener ein Austausch oder Service von Teilen im geringbelasteten Bereich der Stopfschnecke erforderlich ist und damit der Serviceaufwand der Stopfschnecke insgesamt abnimmt. Erfindungsgemäß wurde also erkannt, dass insbesondere die Materialwahl im Bereich des geringbelasteten Bereichs der Schnecke die Standzeit der Schnecke insgesamt verbessern kann.

Eine vorteilhafte Ausführung der Erfindung ist dadurch gekennzeichnet, dass mindestens ein Teil der mehrteiligen rotierenden Schnecke aus einem hochlegierten Stahl oder einem Gusseisen mit einem Chromgehalt von mehr als 10 Masse % besteht, wobei der mindestens eine Teil im hochbelasteten und stark verschleißanfälligen Bereich der Stopfschnecke angeordnet ist. Der hochbelastete und stark verschleißanfällige Bereich der Stopfschnecke ist vor allem vor und / oder im Austrittsbereich gegeben. In diesem hochbelasteten Bereich der Schnecke müssen Werkstoffanforderungen hinsichtlich einer Zugfestigkeit Rₘ von mindestens 500 N/mm² und eine hohe Verschleißbeständigkeit erfüllt sein. Die erfindungsgemäßen hochlegierten Stähle erfüllen diese Anforderungen, wobei hochlegierte Stähle so definiert sind, dass zumindest ein Legierungselement aus der Gruppe Chrom, Vanadium, Kobalt oder Wolfram, einen Anteil größer 4 Masse % aufweist. Ein hoher Chromgehalt im erfindungsgemäßen Gusseisen erlaubt eine Erhöhung der Zugfestigkeit, der Härte und der Warmfestigkeit, bei einem vergleichbar bleibenden Dehnungsverhalten und einer insgesamt hohen Verschleißbeständigkeit, wodurch ebenso die obigen Werkstoffanforderungen hinsichtlich Zugfestigkeit und Verschleißbeständigkeit erfüllt werden. Eine ebenso vorteilhafte Ausführung der Erfindung ist dadurch gekennzeichnet, dass mindestens 60 %, bevorzugt mindestens 75 %, der Schneckenlänge L der mehrteiligen rotierenden Schnecke aus einem Gusseisen mit einem Chromgehalt von weniger als 1 Masse % besteht. Der geringbelastete Bereich der rotierenden Schnecke wird vorteilhafterweise aus Gusseisen mit einem Chromgehalt von weniger als 1 Masse % ausgeführt, womit für diesen geringbelasteten Bereich hinsichtlich Zugfestigkeit und Bruchdehnung ausreichende mechanisch-physikalische Werkstoffeigenschaften vorliegen bei gleichzeitig vorteilhaftem Verhältnis von Materialkosten zu Laufzeit.

Die Verwendung der erfindungsgemäßen Stopfschnecke zur Entwässerung eines Aufgabeguts, ist besonders vorteilhaft bei einem aus Faserstoff, z.B. Holzfaserstoff oder Hackschnitzel, bestehendem Aufgabegut, wobei der Faserstoff im Rahmen der Papier und Zellstoffherstellung und/oder im Rahmen der Herstellung von MDF Produkten und/oder im Rahmen der Herstellung von Bioethanol entwässert wird. In diesen Verwendungsbereichen führt das Aufgabegut durch hohen Druck und hohe Temperaturen insbesondere im letzten Drittel der Schnecke zu Verschleiß. Dieser ist bei der Entwässerung von Faserstoffen zur Herstellung von MDF Produkten höher ausgeprägt, weil mehr abrasive Materialien wie Erde, Steine etc. den Faserstoff begleiten.

Die Erfindung wird nun anhand der Zeichnungen beispielhaft beschrieben.
Fig. 1 zeigt den grundsätzlichen Aufbau einer Stopfschnecke zur Entwässerung eines Aufgabeguts entsprechend dem Stand der Technik.
Fig. 2 zeigt den grundsätzlichen Aufbau einer Stopfschnecke zur Entwässerung eines Aufgabeguts entsprechend dem Stand der Technik in einer Schnittdarstellung.
Fig. 3 ist eine Darstellung der Schnecke der erfindungsgemäßen Stopfschnecke.

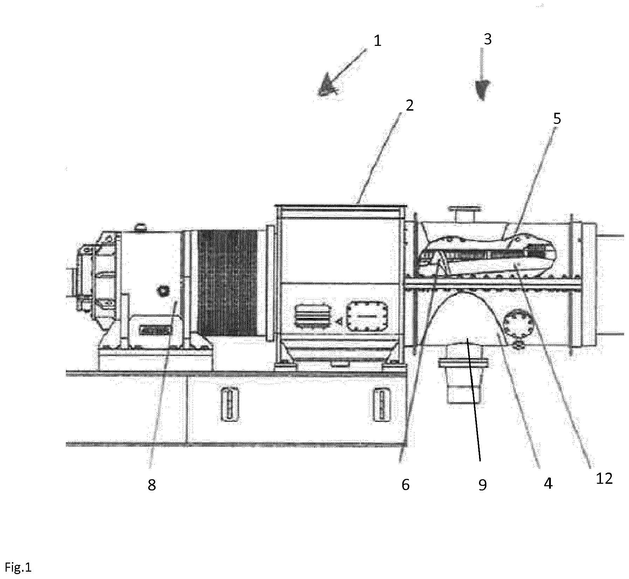

Fig. 1 zeigt eine Stopfschnecke 1 mit einem Einlassbereich 2 zur Aufnahme des zu entwässernden Aufgabeguts, einem Entwässerungsbereich 3 mit einem mit Öffnungen versehenen Gehäuse 4, einem Flüssigkeitsablauf 9 und einer rotierenden Schnecke 5 mit einer Welle 12 und einer spiralförmigen Wendel 6. Es ist denkbar, dass auch mehrere spiralförmige Wendeln 6 sowohl durchgehend als auch unterbrochen ausgeführt sein können. Die rotierende Schnecke 5 ist im Lager 8 gelagert. Das im Einlassbereich 2 aufgegebene Gut, z.B. Holzhackschnitzel, Einjahrespflanzen, Stroh, Bagasse oder dergleichen, wird durch die spiralförmige Wendel 6 der rotierenden Schnecke 5 in das Gehäuse 4 geführt und durch dieses hindurchgepresst, wobei Flüssigkeit, meist Wasser das auch mit Chemikalien vermischt sein kann, in die Ablaufkammer 9 rinnt und von dort abgeführt wird.

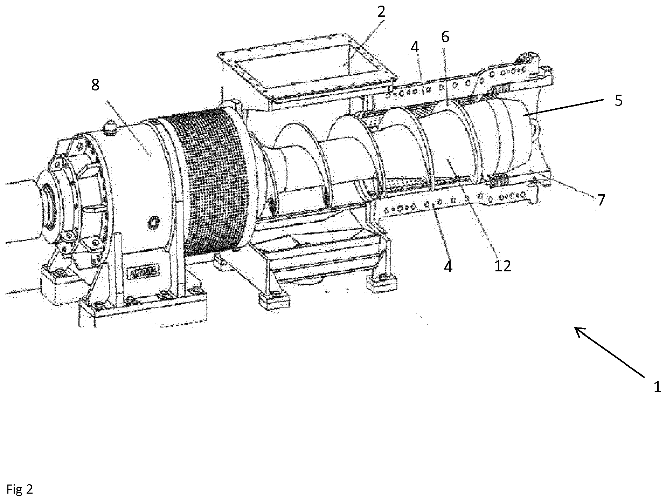

Fig. 2 zeigt eine Stopfschnecke 1 mit einem Einlassbereich 2 zur Aufnahme des zu entwässernden Aufgabeguts, einer rotierenden Schnecke 5 und einem Auslassbereich 7 zur Abgabe des Aufgabeguts, wobei die rotierende Schnecke 5 im Lager 8 gelagert ist. Das im Einlassbereich 2 aufgegebene Gut wird durch die auf der Welle 12 angebrachte spiralförmige Wendel 6 der rotierenden Schnecke 5 in das Gehäuse 4 geführt und durch dieses hindurchgepresst. Durch die hohe Kompression des aufgegebenen Guts tritt an der Innenseite des Gehäuses 4 sowie an der rotierenden Schnecke 5 insbesondere vor und / oder im Austrittsbereich hoher Verschleiß auf, so dass die verschleißenden Teile in regelmäßigen Abständen ausgetauscht werden müssen. Die rotierende Schnecke 5 und das Gehäuse 4 können dann in einer Werkstatt durch Aufpanzerung o.ä. wieder für einen neuerlichen Einsatz aufbereitet werden.

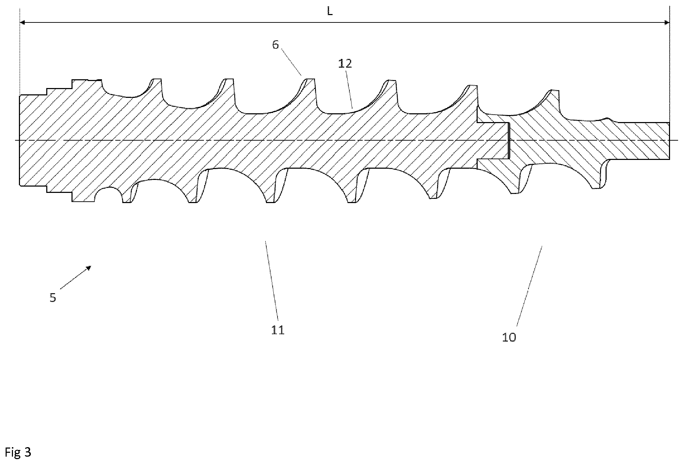

In Fig. 3 ist die Schnecke 5 der erfindungsgemäßen Stopfschnecke 1 dargestellt, bei der die rotierende Schnecke 5 lösbar mehrteilig ausgeführt ist, wobei mindestens eine lösbare Verbindung der mehrteiligen rotierenden Schnecke 5 innerhalb der Schneckenlänge L vorgesehen ist und wobei innerhalb der Schneckenlänge L mindestens zwei Teile 10, 11 der mehrteiligen rotierenden Schnecke 5 aus unterschiedlichen Werkstoffen bestehen. Dadurch kann ein Teil 10 der Schnecke 5 der Stopfschnecke 1, der hochbelastetet ist und stark verschleißt, aus hochbelastbarem Werkstoff gefertigt werden, wohingegen die Werkstoffwahl für einen geringbelasteten Teil 11 der Schnecke 5 nach ökonomischen Gesichtspunkten erfolgen kann. Typischerweise ist erfindungsgemäß mindestens eine lösbare Verbindung der mehrteiligen Schnecke 5 so ausgeführt, dass die lösbare Verbindung Teile der Schnecke 10, 11, an denen jeweils eine spiralförmige Wendel 6 angebracht ist, verbindet.

Die vorliegende Erfindung bietet somit Vorteile gegenüber konventionellen Stopfschnecken:
Die Teile der Schnecke, die hochbelastet sind und stark verschleißen, können aus hochbelastbaren Werkstoffen gefertigt werden, und so für verlängerte Laufzeiten ausgelegt werden. Geringbelastete Teile der Schnecke können hinsichtlich der Werkstoffwahl nach ökonomischen Gesichtspunkten gestaltet werden. Ein optimaler Kompromiss zwischen Werkstoffeinsatz und Laufzeit der mehrteiligen Schnecke wird so gefunden. Entsprechend dieser optimalen Werkstoffwahl kann bei einer erfindungsgemäßen Schnecke auf eine Veredelung der Oberfläche der Schnecke, z.B. durch Aufschweißen einer Schutzschicht, durch eine Aufpanzerung, oder ähnlichem, verzichtet werden.

Entsprechend der Teilung der Schnecke ist bei Bedarf auch nur jener Teil der Schnecke zu ersetzen, der verschlissen oder defekt ist. Der Tausch eines Teils einer mehrteiligen Schnecke ist weit weniger arbeitsaufwändig als der Tausch einer einteiligen Schnecke. So wird der Reparaturaufwand und die Stillstandszeit deutlich reduziert. Weiters ist auch der Materialeinsatz bei Tausch eines Teils einer mehrteiligen Schnecke verglichen zu Austausch einer einteiligen Schnecke weit niedriger.

Entsprechend dem geteilten Aufbau der Schnecke kann das Verhalten der Stopfschnecke hinsichtlich der zu erzielenden Fördermenge, wie auch hinsichtlich der zu erzielenden Kompression bzw. Verdichtung, mit einem geringen Aufwand an veränderliche Prozesserfordernisse angepasst werden. Die Anpassung der Fördermenge erfolgt durch einfachen Austausch der Teile der Schnecke, die dem Förderbereich zuzuschreiben sind, durch Teile, deren Geometrie die veränderte Fördermenge der Stopfschnecke berücksichtigen. Ebenso erfolgt die Anpassung der Kompression bzw. der Verdichtung durch einfachen Austausch der Teile der Schnecke, die dem Kompressionsbereich zuzuschreiben sind, durch Teile, deren Geometrie die veränderten Anforderungen hinsichtlich Kompression bzw. Verdichtung berücksichtigen. Dabei erlaubt die Möglichkeit der Anpassung der Kompression auch eine Optimierung der erzielbaren Entwässerung des Aufgabeguts.

## Patentansprüche

1. Stopfschnecke (1) zur Förderung eines Aufgabeguts von einem Einlassbereich (2) zu einem Auslassbereich (7), wobei die Bereiche (2,7) unterschiedliche Druckniveaus aufweisen, bei gleichzeitiger Entwässerung des Aufgabeguts durch Kompression, mit einem Gehäuse (4) und einer rotierenden Schnecke (5) mit einer Schneckenlänge L in Axialrichtung, wobei die rotierende Schnecke (5) lösbar mehrteilig ausgeführt ist und mindestens eine lösbare Verbindung der mehrteiligen rotierenden Schnecke (5) innerhalb der Schneckenlänge L vorgesehen ist, wobei innerhalb der Schneckenlänge L mindestens zwei Teile (10,11) der mehrteiligen rotierenden Schnecke (5) aus unterschiedlichen metallischen Werkstoffen bestehen, **dadurch gekennzeichnet, dass** mindestens ein Teil (11) der mehrteiligen rotierenden Schnecke (5) aus einem Gusseisen mit einem Chromgehalt von weniger als 1 Masse % besteht wobei das Gusseisen eine minimale Härte von 260 HB30, eine minimale Zugfestigkeit Rₘ von 800 N/mm² und eine Bruchdehnung im Bereich von 1 bis 10 % aufweist, und der mindestens eine Teil (11) im geringbelasteten Bereich der Stopfschnecke angeordnet ist.

2. Vorrichtung nach Anspruch 1, **dadurch gekennzeichnet, dass** mindestens ein Teil (10) der mehrteiligen rotierenden Schnecke (5) aus einem hochlegierten Stahl oder einem Gusseisen mit einem Chromgehalt von mehr als 10 Masse % besteht, wobei der mindestens eine Teil (10) im hochbelasteten und stark verschleißanfälligen Bereich der Stopfschnecke angeordnet ist.

3. Vorrichtung nach Anspruch 1 bis 2, **dadurch gekennzeichnet, dass** mindestens 60 %, bevorzugt mindestens 75 %, der Schneckenlänge L der mehrteiligen rotierenden Schnecke (5) aus einem Gusseisen mit einem Chromgehalt von weniger als 1 Masse % besteht.

4. Verwendung der Stopfschnecke (1) nach Anspruch 1 zur Entwässerung eines Aufgabeguts, **dadurch gekennzeichnet, dass** das Aufgabegut ein Faserstoff ist, insbesondere ein Holzfaserstoff oder Hackschnitzel, und der Faserstoff im Rahmen der Papier und Zellstoffherstellung und/oder im Rahmen der Herstellung von MDF Produkten und/oder im Rahmen der Herstellung von Bioethanol entwässert wird.

## Claims

1. Plug screw feeder (1) for conveying feedstock from an inlet area (2) to an outlet area (7), where the areas (2, 7) have different pressure levels, and for dewatering the feedstock at the same time by means of compression, with a housing (4) and a rotating screw (5) with a screw length L in axial direction, where the rotating screw (5) is designed in several detachable parts and at least one detachable connection in the multi-part, rotating screw (5) is disposed within the screw length L, where within the screw length L at least two parts (10, 11) of the multi-part, rotating screw (5) are made of different metal materials, **characterised in that** at least one part (11) of the multi-part, rotating screw (5) is made of cast iron containing less than 1% by mass chromium, where the cast iron has a minimum hardness of 260 HB30, minimum tensile strength Rₘ of 800 N/mm² and elongation at break in the range of 1 to 10%, and the at least one part (11) is disposed in the low-load area of the plug screw feeder.

2. Device according to claim 1, **characterized in that** at least one part (10) of the multi-part, rotating screw (5) is made of a high-alloy steel or cast iron containing more than 10% by mass chromium, where the at least one part (10) is disposed in the high-load area of the plug screw feeder that is highly susceptible to wear.

3. Device according to claim 1 or 2, **characterized in that** at least 60%, preferably at least 75%, of the screw length L of the multi-part, rotating screw (5) is made of cast iron with less than 1% by mass chromium.

4. Use of the plug screw feeder (1) according to claim 1 to dewater a feedstock, **characterized in that** the feedstock is a pulp, especially wood pulp or chips, and that the pulp is dewatered in the production of pulp and paper and/or the production of MDF products and/or the production of bioethanol.

## Revendications

1. Dispositif d'alimentation à vis tampon (1) pour transporter une matière première à partir d'une zone d'entrée (2) vers une zone de sortie (7), les zones (2,7) ayant différents niveaux de pression, pour égoutter simultanément la matière première par compression, comprenant un boîtier (4) et une vis rotative (5) ayant la longueur de vis L dans la direction axiale, la vis rotative (5) étant conçue en plus parties séparables, et au moins une liaison amovible dans la vis rotative (5) en plusieurs parties étant disposée dans la longueur de vis L, au moins deux parties (10, 11) de la vis rotative (5) en plusieurs parties étant constituées de matières métalliques différentes, **caractérisé en ce qu'**au moins une partie (11) de la vis rotative (5) en plusieurs parties étant constituée en fonte ayant une teneur en chrome inférieure à 1 % en masse, la fonte présentant une dureté minimum de 260 HB30, une résistance à la traction minimale Rₘ de 800 N/mm² et un allongement après rupture compris entre 1 et 10 %, et ladite partie (11) étant disposée dans la partie à faible charge du dispositif d'alimentation à vis tampon.

2. Dispositif selon la revendication 1, **caractérisé en ce qu'**au moins une partie (10) de la vis rotative (5) en plusieurs parties est constituée d'un acier fortement allié ou d'une fonte dont la teneur en chrome est supérieure à 10 % en masse, ladite partie (10) étant disposée dans la zone à charge élevée du dispositif d'alimentation à vis tampon qui présente une forte propension à l'usure.

3. Dispositif selon la revendication 1 ou 2, **caractérisé en ce qu'**au moins 60 %, de préférence au moins 75 % de la longueur de vis L de la vis rotative (5) en plusieurs parties est constituée en fonte dont la teneur en chrome est inférieure à 1 % en masse.

4. Utilisation de la vis tampon (1) selon la revendication 1, pour égoutter la matière première, **caractérisée en ce que** la matière première est une pâte, en particulier une pâte de bois ou des copeaux de bois, et que la pâte est égouttée au cours de la production de pâte et papier et/ou de produits MDF et/ou de bioéthanol.
